# EUROPEAN PATENT APPLICATION

(11) **EP 4 019 370 A1**
(43) Date of publication of application: **29.06.2022**
(21) Application number: 21217767.9
(22) Date of filing: 23.09.2009
(51) Int. Cl.: B61L 23/04, B61K 9/08, G01B 11/25, G01B 11/26, G01B 11/30

(54) **MONITORING A TURNOUT OF A RAILWAY OR TRAMWAY LINE**

(30) Priority: 23.09.2008 NL 2002013; 22.09.2009 NL 2003527
(62) Divisional of application: 09171048.3
(71) Applicant: VolkerRail Nederland BV, 4131 NJ Vianen (NL)
(72) Inventor: Schoone, Clemens, 4131 NJ Vianen (NL)
(74) Representative: Assendelft, Jacobus H.W.

(57) **Abstract**

Invented is a system for contact less recording of the profile of a rail of a turnout to determine its condition, wherein a light beam from a laser device is projected onto an area of the rail facing the opposite rail and the laser device is moved along the rail and the light reflected from said area of the rail is recorded by an imaging device, while the location of the point blade of the turnout as a reference point is detected on the basis of a substantial change in detected distance, and the signal from the imaging device is associated with said reference point, which system is mounted to a standard measuring train.

## Description

This invention relates to an apparatus and method for monitoring wear and deformation of a turnout (also called switch and crossing) of a railway or tramway line.

A turnout is known to undergo wear and deformation with use, which must be corrected from time to time by e.g. grinding or replacement. The correct moment for maintenance is generally determined by periodic measurements of the parameters of one or more components of the turnout, such as rails, by using contact or non-contact sensors, e.g. laser measurement known as triangulation.

With triangulation the component is struck with a laser light beam and a video camera has its optical axis inclined to the direction of the laser beam to read the shape generated by the interference between the laser beam and the component under examination.

The principle of the laser triangulation requires an orthogonal to the objects surface positioned area camera (CCD- or CMOS-matrix) to measure the lateral displacement or the deformation of a laser line projected in a known angle . (e.g. 60°) onto the objects surface. The elevation profile of interest is calculated from the deviation of the laser line from the zero position. From the deviation of the laser line propagating onto the objects surface, the elevation of the object is determined by the point of incidence.

The wear or deformation of a turnout is rather irregular and typically concentrates on particular locations, such as the stock rails, wing rails, check rails, point blades, frog and crossing. The inventors have found out that for proper monitoring the measurement must be accurately associated with its location along the turnout.

An object of the invention is one or more of the following: to measure the wear or deformation of the turnout; to measure parameters of a component, such as rail, without any mechanical contact with the component and without the need to use mechanical centring devices; to acquire information relating to the actual profile of the component, its degree of wear and its vertical and transverse deformation; to be able to accurately locate the location of the measurements, particularly relative to a reference point; to effect the measurements while insensitive to oscillation and deformation of the vehicle on which the apparatus is mounted; to obtain desired results from measurements in real time; to be able to conduct the measurements at a high velocity of at least 10 or 20 km/hr of the measuring train.

To this end, the invention provides (see the claims) an apparatus (Turnout Measurement System; TMS) and method having a contact less operating reference point determining system (BDS; blade detection system) and/or a contact less operating rail profile measuring system (PMS), wherein preferably these two systems are designed to operate in mutual association.

The TMS, BDS and/or PMS are preferably mounted to a railway vehicle.

The PMS preferably is designed to operate in at least two operating modes; a first mode with low detection rate or sampling rate and a second mode with high detection rate or sampling rate, and has switching means to switch between said two operating modes, which switching means are controlled by a controlling unit which receives information about the location of the TMS along the track, which location information is e.g. provided by GPS or a similar wireless operating positioning system. Thus, remote from the turnout of interest, the switching means are switched such that the PMS operates with low detection rate or sampling rate and when the TMS comes closer to said turnout, the switching means are switched such that the PMS operates with high detection rate or sampling rate such that the rail profile or other part of interest of the turnout is detected more accurate compared to the railway remote from the turnout.

Preferably the BDS is designed such that it is only switched on if at or close to a turnout and otherwise is switched off. This switching is carried out by switching means connected to a controlling unit which receives information about the location of the TMS along the track, which location information is e.g. provided by GPS or a similar wireless operating positioning system. Thus, while coming closer to a turnout the switching means are switched such that the BDS is switched on and when the TMS has passed the turnout or the location of interest of the turnout to be detected by the BDS, the BDS is switched off.

Preferably the TMS is designed such that the sampling or detection action of the PMS is automatically synchronised with the event that the BDS detects the location of interest of the turnout, e.g. the reference point. In a preferred embodiment this means that the sampling rate of the PMS is modified as soon as the reference point is detected by the BDS. As an example, the sampling rate of the PMS is constant and provides a measurement with e.g. 300 millimeter spacing. When the reference point is detected by the BDS, the control unit commands the PMS to change, e.g. temporarily increase or decrease, the sampling rate such that the next sample is taken within 5 millimeters from the reference point. After that the sampling rate of the PMS is typically brought back to the sampling rate applied just before detection of said reference point (in this example 300 millimeter spacing). Thus, at all times the PMS takes a sample within a distance from the reference point of 15 or 10 or 5 millimeter at the most while the sampling rate of the PMS immediately before arriving at the reference point is such that the sampling spacing along the track is at least 50 or 100 millimeter while typically said spacing immediately after said sample at the reference point is taken, is also at least 50 or 100 millimeter.

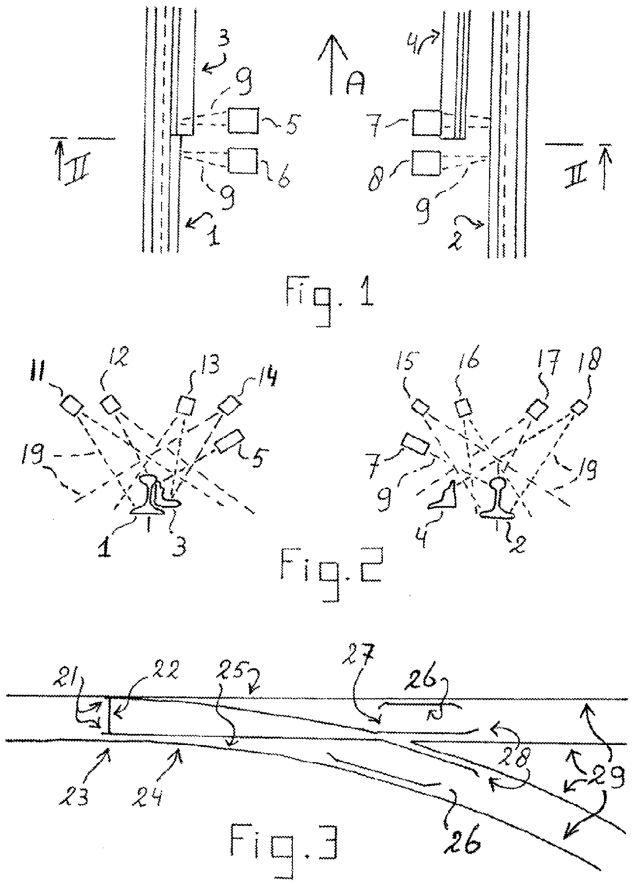

The BDS contains laser sensors which preferably operate according to the laser triangulation method, preferably at least one for each opposite rail of the turnout. In an embodiment there are four fixed laser triangulation (LT) sensors (see fig. 1). Two LT sensors, 5 and 6, are assigned to the one (left) stock or running rail. The other two LT sensors 7 and 8, are assigned to the opposite (right) stock or running rail. With 3 and 4 the point blades are indicated, which are commonly movable sideways. Point blade 3 is bearing against the left rail to take a passing train wheel over from its associated stock rail, while point blade 4 keeps a distance to the right rail to let the relevant train wheel pass. All sensors are substantially continuously measuring the distance to the inner side of the rail, when activated. The LT sensors are preferably mounted such that their optical axis and associated laser is outwardly directed obliquely downward and perpendicular to the lengthwise direction of the associated rail, such that they monitor the inner side of the rail obliquely from above. In this manner the region of interest, in which the point blade is positioned against the stock rail, is observed (the situation according to the left hand part of fig. 1). The LT sensors are preferably connected to the analogue IO boards of the measuring computer. Their signals are e.g. compared with a threshold value.

Preferably, two LT sensors are assigned to the same rail and are mutually spaced in the longitudinal direction of the rail. Said two LT sensors preferably have a parallel orientation. The PMS is preferably active within the spacing between said two LT sensors. Said spacing is preferably less than 200 or 500 millimeter, e.g. measures substantially 100 mm.

In case of a blade point passage by the apparatus, as illustrated in figure 1, at a particular moment one of the pair wise mounted sensors, 5, will sense the point blade positioned against the stock rail, while the second sensor, 6, is sensing the inner side of the stock rail. This occurrence will cause a sudden significant change in the signal of 5 while the signal of 6 remains virtually unchanged. As a result the differential signal of 5 and 6 changes as well. Hence the usage of the differential signal causes the direction of blade point passage to be irrelevant. In case of passage in the direction opposite to fig. 1 the signal of 6 will first undergo a sudden significant change.

The PMS contains vision modules which preferably operate according to the light sectioning method which is a two dimensional extension of the laser triangulation method. Each vision module is preferably provided with a laser device and a video camera. Preferably each stock or running or different rail is simultaneously scanned by a group of at least three or four vision modules. Thus the apparatus is provided with eight vision modules (two groups of four each) in a preferred embodiment, to simultaneously monitor both opposite rails. The vision modules are preferably mounted such that their laser beams form a single projection plane perpendicular to the longitudinal direction of the associated rail and/or such that they share a common plane on which their laser light is projected.

The mutual position of the vision modules allows for optimal profile reconstruction of the component under examination, e.g. the vision modules, preferably at least one or at least two vision modules, are located at both sides of the associated rail and monitor said rail obliquely from above. Preferably the location transverse to the longitudinal direction of the rail and/or the angle of inclination of the optical axis of the vision modules at the same side of the associated rail mutually differs, preferably by at least 10 or 20 millimeter and 10 or 20 degrees, respectively.

Preferably the field of vision of a vision module has overlapping edges with the field of vision of an adjacent vision module. More preferably, the field of vision of a vision module has only partly overlap, preferably not more than 20% or 50% overlap, with the field of vision of an adjacent vision module at the same (one) side of the associated running or stock or different rail; (and/) or the field of vision of a vision module has substantially complete overlap with the field of vision of an adjacent vision module at the same (other) side of the associated running or stock or different rail.

Preferably the vision modules associated with the one or other running or stock rail provide a common field of vision such that simultaneously the head of the stock or running rail and associated point blade or check rail or wing rail over its complete top and complete sides and a part of the stock or running rail and associated point blade or check rail or wing rail at least 30 or 50 millimeter below the top of the head, such as part of the foot at the bottom of the relevant rail, are scanned. For the point blade this applies preferably both in its position bearing against the stock rail and its position moved to a maximum distance from the stock rail.

The vision modules are preferably connected directly to the frame grabber boards of the measurement computer. In this way images are acquired that are used to calculate the rail profile, particularly of the head and fragments of foot and web. The distance between a vision module and the relevant rail measures between 50 and 750 millimeter, particularly between 200 and 400 millimeter.

Preferably one or more of the following applies: Each LT sensor and vision module is dedicated to a single rail; each LT sensor and vision module has a fixed optical axis; each LT sensor or vision module is designed to operate with a range of optical frequency different from the range of another LT sensor or vision module assigned to the same rail and being part of the same apparatus; the projection plane of the PMS is located exactly in the centre of the spacing between the LT sensors; all sensors are supported by or suspended from a bogy of the measuring train.

Based on the measured rail profiles, one or more of the following parameters are calculated: rail head wear (vertical, horizontal, wear angle); slope of rails; track gauge; guiding rail groove width; width of the crossing nose groove; guiding width; groove width between the switch blade and the reaction rail. In the crossing of a switch there is a relationship between the frog, wing rail and checkrail, which can also be checked by the invention by measuring the gauge.

Preferably there is interaction between BDS and PMS. While advancing towards the front of the turnout, the BDS will first detect the stock rail. On the arrival at the point blade, the BDS senses the blade positioned against the stock rail (see above). As a result of this detection, the BDS produces as a trigger mark for the PMS. With the known distance of x and y millimeter between LT sensors and the cross section plane (cross section line), combined with the known measuring characteristics of both systems, it is possible to relate the correct cross sectional profile, as obtained by the PMS, to the trigger mark (which represents the point blade).

Preferably, the signals from BDS and PMS are entered into a computer, to which BDS and PMS are connected.

A non-limiting, preferred embodiment is shown in the drawing.

Fig. 1 shows in top view the left 3 and right 4 point blades of a turnout and the associated stock rails 1, 2. The apparatus is mounted to the under side of a measuring train (not shown) . Of the BDS, 5 and 7 are positioned 50 millimeter in front of the cross section line (arrows II). 6 and 8 are positioned 50 millimeter behind the cross section line. The cross section line resembles the plane in which the PMS is measuring cross sectional profiles of the rails. The arrow A indicates the direction in which the vehicle moves.

Figure 2 shows in sectional view along line II - II of fig. 1 the BDS and PMS in combination with the rails 1 - 4 of the turnout. The sensors 6 and 8 of the BDS are not visible in this view and would be in the same location in this view as sensors 5 and 7, if the direction of view would be opposite compared to fig. 2. PMS contains two groups of four vision modules 11 - 14 and 15 - 18, respectively, each group being assigned to the left or right side of the turnout. Of each group, two vision modules 11, 12 and 17, 18, respectively, are located to the outer side, directed obliquely downwards and two vision modules 13, 14 and 15, 16, respectively, are located to the inner side of the associated rail 1 and 2, respectively, and are oppositely oriented and directed obliquely downwards.

While advancing towards the turnout, the BDS will first detect the running rails 29. On arrival at the blade points 21, a sudden change in the signal of first 5 or 7 and then 6 or 8 is detected. This change is used as a trigger mark for the PMS. With the known distance of 50 millimeter between the sensors 5 - 8 and the cross section plane (line II - II) and the known measuring frequency of the PMS, it is possible to assign the correct cross sectional profile to the trigger mark, thus representing the blade point as a reference point.

Fig. 3 illustrates the main parts of a turnout: (switch) point blades 21, tie bar 22, toe 23, heel 24, stock rails 25, check rails 26, crossing 27, wing rails 28 and running rails 29.

Thus, the invention preferably provides a device and method for the contact less dynamic recording of the profile of a rail of a turnout to determine its condition, such as wear or deformation, wherein at least one light beam from a laser device is projected onto an area of the rail facing the opposite rail and the laser device is moved along the rail and the light reflected from said area of the rail is focussed onto a flat light detection element of an imaging device of which the optical axis makes a fixed angle relative to the emitting direction of the laser device while the imaging device and the laser device have mutually fixed locations such that the signal coming from the light detection element is processed in a computer processor on the basis of a triangulation procedure to detect the distance between de imaging device and the rail and to determine the location of a reference point, such as the point blade of the turnout, on the basis of a substantial change in said detected distance, and the signal from at least three or four vision modules, which form a single projection plane directed onto the rail, is associated with said reference point, and wherein the at least one laser device and the vision modules are mounted to a railway vehicle designed for a velocity of at least 20 or 50 km/h, such as a standard measuring train.

## Claims

1. A device (TMS) for the contact less dynamic recording of the profile of a rail of a turnout to determine its condition, such as wear or deformation, wherein
at least one light beam from a laser device of a profile measuring system (PMS), operating at a predetermined sampling rate, is projected onto the rail and the light reflected from said rail is recorded by an imaging device the signal of which is processed in a computer processor or controlling unit, and
the location of a reference point at the turnout is detected by a blade detection system (BDS), and the sampling rate of the PMS is synchronised with the detection event of the reference point by the BDS.

2. A device according to claim 1, wherein the synchronisation is such that at all times the PMS takes a sample within a distance from the reference point of 15 or 10 or 5 millimeter at the most while the sampling rate of the PMS immediately before arriving at the reference point and/or after synchronisation has taken place, is such that the sample spacing along the track is at least 50 millimeter.

3. A device according to claim 1 or 2, wherein the BDS is provided with two distance measuring LT sensors (5 - 8) with mutual distance in advancing direction and wherein the controlling device is designed to compare the signals from said LT sensors (5 - 8) to decide the reference point detection event.

4. A device, preferably according to any of claims 1 - 3, mounted to a railway vehicle and comprising a group of at least three or four P sensors (11 - 14; 15 - 18) to simultaneously scan a stock or running or different rail of the track.

5. A device according to any of claims 1 - 4, which P sensors (11-14) are mounted such that their laser beams form a single projection plane perpendicular to the longitudinal direction of the associated rail and/or such that they share a common plane on which their laser light is projected.

6. A device according to any of claims 1-5, wherein theP sensors (11-14) are located at both sides of the associated rail and monitor said rail obliquely from above; and/or the location transverse to the longitudinal direction of the rail and/or the angle of inclination of the optical axis of the P sensors at the same side of the associated rail mutually differs, preferably by at least 10 or 20 millimeter and 10 or 20 degrees, respectively.

7. A device according to any of claims 1-6, wherein the field of vision of a P sensor (11-14) has overlapping edges with the field of vision of an adjacent P sensor of the same group, preferably not more than 20% or 50% overlap, with the field of vision of an adjacent P sensor at the same (one) side of the associated rail; (and/) or the field of vision of a P sensor has substantially complete overlap with the field of vision of an adjacent P sensor at the same (other) side of the associated running or stock or different rail.

8. A device according to any of claims 1-7, wherein the P sensors associated with a rail provide a common field of vision such that simultaneously the head of the rail and associated point blade or check rail or wing rail over its complete top and complete sides extending at least 30 or 50 millimeter below the top of the head, such as part of the foot at the bottom of the relevant rail, are scanned.
